# EUROPÄISCHE PATENTSCHRIFT

(11) **EP 0 313 542 B1**
(45) Veröffentlichungstag und Bekanntmachung des Hinweises auf die Patenterteilung: **09.03.1994**
(21) Anmeldenummer: 88890207.9
(22) Anmeldetag: 11.08.1988
(51) Int. Cl.: H01H 9/56

(54) **Einrichtung zum gesteuerten Einschalten von induktiven Elementen im Hochspannungsnetz**
Device for the controlled switching of inductive elements in a high-voltage network
Dispositif d'enclenchement contrôlé d'éléments inductifs dans le réseau haute tension

(30) Priorität: 21.10.1987 AT 2777/87
(43) Veröffentlichungstag der Anmeldung: 26.04.1989
(73) Patentinhaber: GEC ALSTHOM T&D GESELLSCHAFT m.b.H., 4020 Linz (AT)
(72) Erfinder: Hutegger, Hans, A-4113 St. Martin im Mühlkreis (AT)
(74) Vertreter: Rossboth, Werner Heinz

(56) Entgegenhaltungen:
- EP-A- 0 222 727

## Beschreibung

Die Erfindung bezieht sich auf eine Einrichtung zum gesteuerten Einschalten von induktiven Elementen im Hochspannungsnetz, insbesondere zum Minimieren von Einschaltstromstößen, mit einer im Schaltsignalweg zu einem Mehrphasen-Leistungsschalter vorgesehenen Torschaltung, welche mit einem Steuereingang an eine Steuersignalschaltung angeschlossen ist, die eine mit der Hochspannung oder einer dazu synchronen Wechselspannung als Meßspannung koppelbare Detektorschaltung und eine mit dieser verbundene, einstellbare Zeitstufe enthält, wobei eine mit den durch den Mehrphasen-Leistungsschalter geschalteten Abzweigströmen koppelbare Speicherschaltung zur Speicherung der Polarität der letzten Stromhalbwellen vor dem Abschalten des Mehrphasen-Leistungsschalters vorhanden ist.

Eine Einrichtung dieser Art zum gesteuerten Ein- und/oder Ausschalten von induktiven und kapazitiven Elementen im Hochspannungsnetz ist aus der AT-PS 384 502 (entspricht der EP-A-0 222 727) bekannt. Um die beim Einschalten von Transformatoren, Eisenkerndrosseln oder kapazitiven Elementen, beispielsweise Kondensatorbatterien oder leerlaufenden Leitungen, auftretenden hochfrequenten Einschaltstromstöße, welche bei kleinen Transformatorleistungen das 10- bis 15-fache des Scheitelwertes des Nennbetriebsstromes erreichen können, zu reduzieren, wird vorgeschlagen, die Einschaltzeitpunkte der einzelnen Phasen zu staffeln. Bei geerdetem Sternpunkt beispielsweise, wird die erste Phase in ihrem Spannungsmaximum und die beiden anderen Phasen eine Viertelperiode später geschaltet, um eine sofortige stationäre Flußverteilung im Transformator bei weitgehendem Wegfall von Ausgleichsvorgängen zu erzielen. Nachteilig ist dabei einerseits, daß die Remanenz als Störgröße den Anfangszustand der Flußverteilung und damit den Mittelwert der sinusförmigen Schenkelflüsse aus der Nullage verschieben kann, anderseits die Einrichtung nur bei Leistungsschaltern mit einem Antrieb pro Pol einsetzbar ist.

Die bekannte Einrichtung weist zwar eine Speicherschaltung zur Erfassung und Speicherung der Polarität der letzten Stromhalbwelle, d.h. Richtung der Remanenz, vor dem Abschalten eines Transformators auf, jedoch dient diese nur dazu, daß das von der Hochspannung abgeleitete Binärsignal für den Einschaltbefehl nur dann durchgeschaltet wird, wenn die Signalflankenrichtung der Richtung der Remanenz entspricht. Damit ist die Möglichkeit gegeben, den Einschaltstromstoß noch weiter zu reduzieren.

Durch die in der Folge aufgezeigte erfindungsgemäße Ausführung wird bezweckt, eine Einrichtung der eingangs genannten Art zu schaffen, welche die vorangeführten Nachteile nicht aufweist und ein praktisch einschaltstoßfreies Einschalten von Transformatoren oder Eisenkerndrosseln im Hochspannungsnetz auf wirtschaftliche Art auch mit einem Mehrphasen-Leistungsschalter erlaubt, welcher einen gemeinsamen Antrieb für alle vorhandenen Pole besitzt.

Dies wird dadurch erreicht, daß die Speicherschaltung aus einem Verknüpfungsglied und je zwei Komparatoren pro Phase besteht, deren Ausgänge mit je einem Eingang einer bistabilen Kippstufe verbunden sind, wobei der Eingang des ersten Komparators direkt, der Eingang des zweiten Komparators dagegen über einen Vollweggleichrichter an einen Wandler angeschlossen ist, der vom einzuschaltenden Abzweigstrom gespeist wird, und der Ausgang des zweiten Komparators mit dem Eingang des Verknüpfungsgliedes verbunden ist, dessen Ausgang mit den zweiten Eingängen der bistabilen Kippstufen in Verbindung steht, und daß der Ausgang der Detektorschaltung sowie die Ausgänge der bistabilen Kippstufen an die Eingänge einer Logikschaltung mit variablen Zeitgliedern angeschlossen sind, welche die Signale aus der Detektorschaltung und Speicherschaltung auswertet und je nach Polarität der letzten Stromhalbwelle in den einzelnen Phasen und unter Berücksichtigung der erstlöschenden Phase sowie der in der einstellbaren Zeitstufe ausgewählten Zeit einen für alle Phasen gemeinsamen Einschaltzeitpunkt freigibt.

Mit einem Mehrphasen-Leistungsschalter mit einem Antrieb für alle Pole wurde an einem Transformator eine Schaltserie durchgeführt, wobei die Einschaltstromstöße aufgezeichnet wurden. Überraschenderweise konnte festgestellt werden, daß bei einem Schaltvorgang kein Einschaltstromstoß aufgetreten war. Theoretische Überlegungen führten zur Erkenntnis, daß beim Ausschalten abhängig vom Löschzeitpunkt der einzelnen Phasen in den Kernschenkeln des Transformators Remanenzfelder verbleiben, deren Summe Null ergibt. Jeder derartigen Feldverteilung kann daher ein für alle Phasen gemeinsamer Einschaltzeitpunkt zugeordnet werden, wenn die erstlöschende Phase und die Polaritäten der letzten Stromhalbwellen bekannt sind. Die Logikschaltung gibt je nach Polarität der letzten Stromhalbwelle in den einzelnen Phasen und unter Berücksichtigung jener Phase, in welcher der Stromfluß zuerst erloschen ist, sowie der ausgewählten Zeit in der einstellbaren Zeitstufe einen für alle Phasen gemeinsamen Einschaltzeitpunkt frei, bei dem praktisch kein Einschaltstromstoß auftritt. Als Bezugszeitpunkt dient dabei ein Binärsignal der Detektorschaltung mit positiver Signalflankenrichtung, d.h. ein positives Spannungsmaximum der Hochspannung oder synchronen Wechselspannung. Die Speicherschaltung speichert die erstlöschende Phase, d.h. jene Phase in der der Stromfluß bei einer Abschaltung des Transformators zuerst erloschen ist, und die Polaritäten der letzten Stromhalbwellen vor ihrem Erlöschen.

Bei einer bevorzugten Ausführung der Einrichtung zum gesteuerten Einschalten von induktiven Elementen in einem dreiphasigen Hochspannungsnetz, sind die für alle drei Phasen gemeinsamen Einschaltzeitpunkte in zwölf vorbestimmten Zeitabständen einer Periode der Nennfrequenz der Hochspannung gestaffelt.

Die Logikschaltung ist dabei so ausgebildet, daß sie die aus der Detektorschaltung und Speicherschaltung empfangenen Signale auswertet und je nach Polarität der letzten Stromhalbwellen in den drei Phasen vor dem Abschalten des Dreiphasen-Leistungsschalters und unter Berücksichtigung der erstlöschenden Phase einen gemeinsamen Einschaltzeitpunkt aus den vorbestimmten Einschaltzeitpunkten wählt, mit der oder einem Vielfachen der Zeit einer Periode der Hochspannungs-Nennfrequenz addiert und von dieser Summe die in der einstellbaren Zeitstufe eingegebene Zeit abzieht.

Damit die Zeitverzögerung zwischen Einschaltimpuls und Berührung der Kontakte des Mehrphasen-Leistungsschalters im Einschaltzeitpunkt berücksichtigt werden kann, entspricht die in der einstellbaren Zeitstufe ausgewählte Zeit der elektrischen Einschalt-Eigenzeit des Mehrphasen-Leistungsschalters. Die mechanische Einschalt-Eigenzeit wird bei der Stückprüfung der Leistungsschalter gemessen und protokolliert. Zur Anpassung der Einrichtung muß daher lediglich die elektrische Einschalt-Eigenzeit in der Zeitstufe eingestellt werden, die man erhält, wenn man von der mechanischen Einschalt-Eigenzeit die Vorzündzeit abzieht.

In einer Ausführung der Einrichtung kann die Logikschaltung mit variablen Zeitgliedern aus einem Mikroprozessor mit Zeit-Einheit bestehen.

Damit ergibt sich eine wirtschaftliche Ausführung, bei der in der Logikschaltung zugleich die Funktion der einstellbaren Zeitstufe integriert werden kann.

Die Logikschaltung mit variablen Zeitgliedern verarbeitet von der Detektorschaltung nur Impulse mit bei einem Spannungs-Nulldurchgang ansteigender Flanke.

Als Bezugszeitpunkt dient der Logikschaltung dadurch ein positives Spannungsmaximum der Hochspannung oder synchronen Wechselspannung bzw. ein Strom-Nulldurchgang mit ansteigender Flanke.

Eine besonders wirtschaftliche Ausführung der Einrichtung ergibt sich, wenn ihre gesamte Schaltung in einem Differentialschutzrelais oder Spannungsregler-Steuergerät integriert ist.

Bestimmte Schaltkreise, beispielsweise zur Erfassung der Abzweigströme oder der Spannung, sind nämlich in solchen Relais oder Steuergeräten bereits vorhanden.

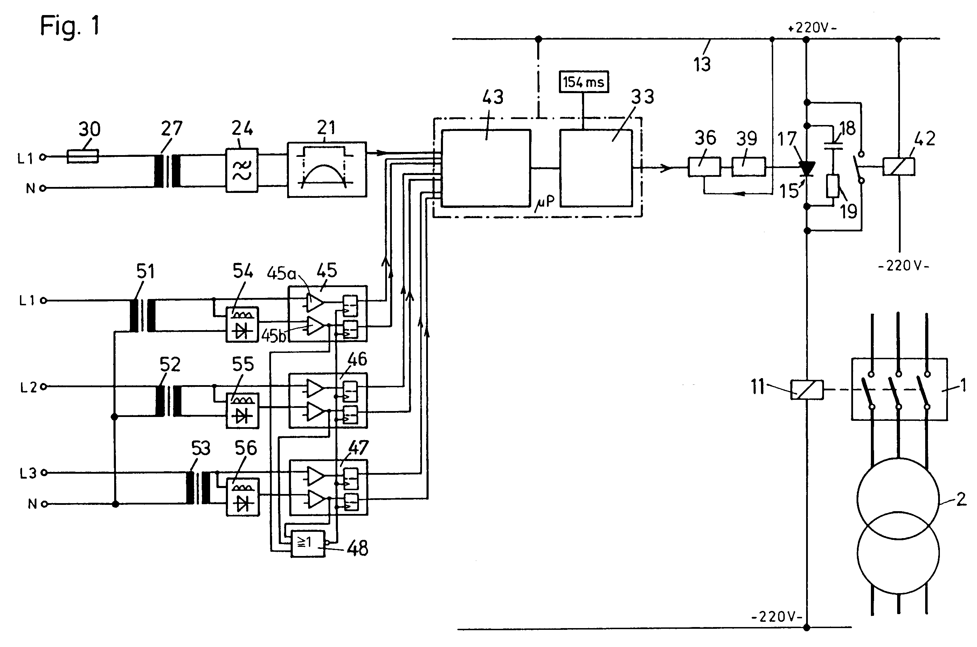

Im folgenden wird an Hand der beiliegenden Zeichnung ein Ausführungsbeispiel des Erfindungsgegenstandes näher erläutert. Es zeigt Fig. 1: das Blockschaltbild einer erfindungsgemäßen Einrichtung.

In Fig. 1 ist das Blockschaltbild einer Ausführung der Einrichtung zum gesteuerten Einschalten von induktiven Elementen in einem dreiphasigen Hochspannungsnetz dargestellt. Im Schaltsignalweg oder Steuerstromkreis des Antriebes für einen dreipoligen Hochspannungs-Leistungsschalter 1 befindet sich die Einschaltspule 11, der ein über die Leitung 13 ankommendes Einschaltbefehlssignal zugeführt werden kann, wodurch die Einschaltspule 11 dann an einer Steuerspannung von beispielsweise 220 V Gleichstrom liegt und den Einschaltvorgang des Leistungsschalters 1 auslöst, der den dreiphasigen Transformator 2 an das Hochspannungsnetz schaltet. Der Einschaltspule 11 ist eine Torschaltung 15 vorgeschaltet, die aus einem Thyristor 17 und parallelgeschaltetem Kondensator 18 mit Widerstand 19 besteht. Der Thyristor 17 entnimmt somit seine Kathoden-Anoden-Spannung dem ankommenden Einschaltbefehlssignal.

Seinen Zündimpuls erhält der Thyristor 17 aus einer Steuersignalschaltung, die aus folgenden Elementen besteht: An die Phase L1 einer der Hochspannung synchronen Wechselspannung ist der Wandler 27 über die Sicherung 30 angeschlossen. Mit der Sekundärwicklung des Wandlers 27 ist über ein Eingangsfilter 24 die Detektorschaltung 21 verbunden, die aus einem Spannungs-Nullpunktsdiskriminator besteht. Beim Eingangsfilter 24 handelt es sich beispielsweise um ein auf eine Frequenz von 50 Hz abgestimmtes Tiefpaßfilter, das durch RC-Glieder gebildet sein kann. Die Detektorschaltung 21 ist an einen Eingang einer Logikschaltung 43 mit variablen Zeitgliedern angeschlossen, deren weitere sechs Eingänge mit einer Speicherschaltung 45 bis 48 verbunden sind. Diese Speicherschaltung 45 bis 48 besteht aus je zwei Komparatoren 45a, 45b pro Phase, welche je mit einer bistabilen Kippstufe verbunden und über einen Wandler 51, 52, 53 an den mit Hilfe des Leistungsschalters 1 einzuschaltenden Abzweigstrom L1, L2, L3 gekoppelt sind.

Der eine Komparator 45a der Speicherschaltung 45 bis 48 ist dabei jeweils direkt an den Wandler 51, 52 bzw. 53 angeschlossen, der andere 45b über je einen Vollweggleichrichter 54, 55 bzw. 56. Die Ausgänge der mit den Vollweggleichrichtern 54, 55, 56 verbundenen Komparatoren 45b sind an die Eingänge eines Verknüpfungsgliedes 48 angeschlossen, dessen Ausgang mit je einem Eingang aller bistabilen Kippstufen verbunden ist. Das aus den Vollweggleichrichtern 54, 55, 56 kommende, gegebenenfalls durch Filter geglättete, pulsierende Signal wird im Komparator 45b in ein positives Rechtecksignal umgewandelt und der jeweiligen bistabilen Kippstufe sowie dem Verknüpfungsglied 48 zugeführt. Das Verknüpfungsglied 48, vorzugsweise ein NOR-Gatter, überwacht in Verbindung mit den Komparatoren 45b das Vorhandensein der Abzweigströme L1, L2, L3. Ist nach der Abschaltung des Transformators 2 der Strom in der erstlöschenden Phase erloschen, ändert sich der logische Zustand im Verknüpfungsglied 48. Diese Änderung am Ausgang des Verknüpfungsgliedes 48 bewirkt die Übernahme des augenblicklichen Zustandes an den Eingängen der sechs bistabilen Kippstufen.

An den Ausgängen der mit den Wandlern 51, 52, 53 direkt verbundenen Komparatoren 45a titt ein positives Rechtecksignal im Takt der positiven Halbwelle des jeweiligen Phasenstromes auf, das bei der Zustandsänderung im Verknüpfungsglied 48 als Logisch-Hoch- oder Logisch-Niedrig-Signal analog zur Polarität der letzten Stromhalbwelle in der nachgeschalteten bistabilen Kippstufe stehen bleibt.

Damit ist nicht nur die erstlöschende Phase, sondern auch die Polarität der letzten Stromhalbwelle in den einzelnen Phasen gespeichert.

Nach jeder Abschaltung des Transformators 2 kann die Logikschaltung 43 mit variablen Zeitgliedern daher auf Grund der aus der Speicherschaltung 45 bis 48 erhaltenen Signale auswerten, in welcher Phase der Strom zuerst erloschen ist und welche Polarität die letzte Stromhalbwelle in den einzelnen Phasen aufgewiesen hat. Bekanntlich werden induktive Ströme bei ihrem Ausschalten im Nulldurchgang oder knapp davor abgerissen.

An den Ausgang der Logikschaltung 43 ist eine einstellbare, vorzugsweise aus einem digitalen Zeitrelais bestehende Zeitstufe 33 angeschlossen. Mit digitalen Zeitrelais ist eine hohe Gehauigkeit und geeichte Einstellbarkeit erzielbar.

Dreipolige Leistungsschalter mit einem Motorfederantrieb haben beispielsweise eine mechanische Einschalt-Eigenzeit von 130 bis 170 ms. Die mechanische Einschalt-Eigenzeit ist dabei jene Zeit, die zwischen Einschaltimpuls für die Einschaltspule 11 und Berührung der Kontakte des Leistungsschalters 1 verstreicht. Zieht man von der mechanischen Einchalt-Eigenzeit die Vorzündzeit ab, erhält man die elektrische Einschalt-Eigenzeit. Die Vorzündzeit ist von der Betriebsspannung, dem Löschsystem und der Schaltgeschwindigkeit des Leistungsschalters abhängig und liegt im Bereich von 1...4 ms.

In der einstellbaren Zeitstufe 33 wird daher eine fixe Zeitverzögerung von 120 ms und ein einstellbereich bis 170 ms vorgesehen sein.

Der Ausgang der einstellbaren Zeitstufe 33 führt über eine Impulsfreigabeschaltung 36 und einen Optokoppler 39 zum Thyristor 17. Die Impulsfreigabeschaltung 36 verhindert, daß der Thyristor 17 zur Zündung nur einen Magerimpuls erhält, was dann der Fall sein kann, wenn der Zündimpuls gerade abfällt, wenn das Einschaltbefehlssignal, beispielsweise ein Gleichspannungsimpuls von 1 s Dauer, auftritt. Optokoppler verwendet man zur Signal-Übertragung Zwischen Systemen mit stark unterschiedlichem Potential.

Um auch ein Zuschalten des Leistungsschalters 1 im spannungslosen Zustand zu ermöglichen, sowie als Sicherheitsvorrichtung für die gesamte Einrichtung, wird mit jedem ankommenden Leistungsschalter-Einschaltbefehlssignal ein Zeitrelais 42 angesteuert, welches mit seinem Schaltkontakt der Torschaltung 15 parallelgeschaltet ist und nach einer Ansprechverzögerung von beispielsweise 50 ms das Einschaltbefehlssignal direkt zu der Einschaltspule 11 durchschaltet.

Wenn eine Hochspannung mit einer Nennfrequenz von 50 Hz angenommen wird, beträgt die Periodendauer 20 ms. Für die Ermittlung des gemeinsamen Einschaltzeitpunktes für alle drei Phasen werden daher ein Bezugszeitpunkt der Detektorschaltung 21, ein Vielfaches von 20 ms, die elektrische Einschalt-Eigenzeit der Leistungsschalter 1 und die gespeicherte Polarität der letzten Stromhalbwelle in den Phasen L1, L2, L3 vor dem Abschalten des Leistungsschalters 1 sowie der erstlöschenden Phase zugrundegelegt.

Der Bezugszeitpunkt ist ein Binärsignal mit positiver Signalflankenrichtung aus der Detektorschaltung 21, d.h. ein positives Spannungsmaximum der Phase L1 der Hochspannung oder synchronen Wechselspannung. Zu diesem Zeitpunkt durchläuft die Stromhalbwelle der Phase L1 mit positiver Flankenrichtung die Nullinie. Erlischt beispielsweise der Strom der Phase L1 in diesem Nulldurchgang, besitzt seine letzte Stromhalbwelle negative, die der Phase L2 ebenfalls negative und die der Phase L3 positive Polarität. Soferne der Strom zuerst in der Phase L3 erlischt, weist seine letzte Stromhalbwelle positive Polarität auf, die der Phase L1 ebenfalls positive und die der Phase L2 negative. Gleiche Polarität besitzen jeweils die Remanenzfelder in den Kernschenkeln des Transformators 2, wobei deren Summe Null ergibt. Hat nun eine Abschaltung des Leistungsschalters 1 zum Bezugszeitpunkt, 20 ms oder einem Vielfachen von 20 ms später stattgefunden und die erstlöschenden Phasen stimmen überein, werden die letzten Stromhalbwellen immer gleiche Polaritäten aufweisen.

Betrachtet man die Remanenzen im ungesättigten Betriebszustand des Transformators 2 nach einer Abschaltung, zeigt sich, daß im Kernschenkel der erstlöschenden Phase keine Wechselstromerregung mehr wirksam wird und sich der remanente Gleichfluß gleich auf die beiden anderen Kernschenkel aufteilt. Die Remanenzinduktion wird dadurch um ein Drittel reduziert. Nach Löschung der Ströme in den beiden anderen Phasen reduziert sich die Remanenzinduktion in den entsprechenden Kernschenkeln ebenfalls um ein Drittel.

Errechnet man den Gleichfluß der Remanenz im Kernschenkel der erstlöschenden Phase und die aus Gleich- und Wechselfluß gebildeten Remanenzen in den Kernschenkeln der nachher löschenden Phasen und überlagert diese vorzeichengerecht, so ergibt deren Summe Null.

Im Betriebszustand des Transformators 2 muß es daher einen Augenblickswert der Erregung des dreiphasigen Feldes geben, bei dem gleiche Relationen wie nach einer Abschaltung vorliegen. Das ist immer zu jenem Zeitpunkt der Fall, wenn sich die Zeitwerte der Ströme in jenen Phasen die der erstlöschenden Phase und den nachher löschenden Phasen entsprechen, wie die Remanenzwerte nach einer Abschaltung verhalten.

Gelingt die Einschaltung des Transformators 2 zu diesem Zeitpunkt, tritt eine sofortige stationäre Flußverteilung in den Kernschenkeln ein und es erfolgt kein Einschaltstromstoß.

Wird eine relative Remanenz von 0,75 angenommen, die von den Kernblechen des Transformators 2 abhängig ist und Werte zwischen 0,6 und 0,8 beträgt, ergibt sich ein vom Strom in der erstlöschenden Phase etwa 50 elektrische Grade abweichender, zwischen dem Vektor des Stromes der erstlöschenden Phase und dem Vektor der letztlöschenden Phase gleicher Polarität liegender Zeitpunkt.

Bei der angenommenen relativen Remanenz ergibt die Rechnung, daß bei diesem Zeitpunkt auch die Größenverhältnisse zwischen den Strömen und Remanenzen gut übereinstimmen. Im relativen Remanenzbereich 0,6...0,9 wurden Winkel zwischen dem Vektor des Stromes der erstlöschenden Phase und dem Einschaltzeitpunkt von 51,4...49,1 elektrischen Graden ermittelt.

Wird beispielsweise ein dreiphasiger Transformator 2 auf seiner in Stern geschalteten Seite abgeschaltet, existieren innerhalb einer Periode der Hochspannungs-Nennfrequenz auf Grund der möglichen Polaritäten der letzten Stromhalbwellen und erstlöschenden Phasen zwölf für die Phasen gemeinsame Einschaltzeitpunkte. Aus der Polarität der beiden zuletzt löschenden Phasen ergibt sich logisch, wo der Winkel zwischen dem Vektor der erstlöschenden Phase und dem Einschaltzeitpunkt liegt.

Im angenommenen Fall, bei einer Hochspannungs-Nennfrequenz von 50 Hz, ergeben sich nach dem Bezugszeitpunkt folgende Einschaltzeitpunkte:

| | | | |
|---|---|---|---|
| Erstlöschende Phase L1 positiv, | L2 positiv, | L3 negativ: | 7,78 ms |
| Erstlöschende Phase L1 positiv, | L2 negativ, | L3 positiv: | 2,22 ms |
| Erstlöschende Phase L1 negativ, | L2 positiv, | L3 negativ: | 17,78 ms |
| Erstlöschende Phase L1 negativ, | L2 negativ, | 13 positiv: | 12,22 ms |
| Erstlöschende Phase L2 positiv, | L1 positiv, | L3 negativ: | 8,89 ms |
| Erstlöschende Phase L2 positiv, | L1 negativ, | L3 positiv: | 14,44 ms |
| Erstlöschende Phase L2 negativ, | L1 positiv, | L3 negativ: | 18,89 ms |
| Erstlöschende Phase L2 negativ, | L1 negativ, | L3 positiv: | 4,44 ms |
| Erstlöschende Phase L3 positiv, | L1 positiv, | L2 negativ: | 1,11 ms |
| Erstlöschende Phase L3 positiv, | L1 negativ, | L2 positiv: | 15,56 ms |
| Erstlöschende Phase L3 negativ, | L1 positiv, | L2 negativ: | 11,11 ms |
| Erstlöschende Phase L3 negativ, | L1 negativ, | L2 positiv: | 5,56 ms |

Die logische Verknüpfung dieser zwölf Zeitpunkte mit den Polaritätszuständen und der jeweils erstlöschenden Phase ist in der Logikschaltung 43 mit variablen Zeitgliedern verwirklicht. Zur Wahl des jeweils richtigen Zeitpunktes werden die aus der Speicherschaltung 45 bis 48 kommenden Signale in der Logikschaltung 43 ausgewertet, außerdem wird die der elektrischen Einschalt-Eigenzeit des Leistungsschalters 1 entsprechende Zeit der einstellbaren Zeitstufe 33 wie folgt umgesetzt: Wird angenommen, die elektrische Einschalt-Eigenzeit des Leistungsschalters 1 beträgt 154 ms, so wird diese Zeit zunächst auf das nächste Vielfache von 20 ms aufgerundet, welches in diesem Fall 160 ms ist. Beträgt der Zustand beispielsweise, erstlöschende Phase L1 positiv, Phase L2 positiv, Phase L3 negativ, ist dieser mit der Zeit 7,78 ms logisch verknüpft. Diese Zeit wird mit dem Vielfachen addiert und von der Summe die elektrische Einschalt-Eigenzeit abgezogen. Der richtige, allen drei Phasen gemeinsame Einschaltzeitpunkt liegt daher 160 + 7,78 - 154 = 13,78 ms nach dem Bezugszeitpunkt oder jeweils 20 ms später. Erhält der Thyristor 17 seinen Zündimpuls 13,78 ms oder 33,78 ms nach dem Bezugszeitpunkt und es liegt ein Einschaltbefehlssignal über die Leitung 13 an, erhält die Einschaltspule 11 Steuerspannung von beispielsweise 220 V Gleichstrom und löst den Einschaltvorgang des Leistungsschalters 1 aus. Nach der elektrischen Einschalt-Eigenzeit von 154 ms beginnt der Stromfluß über die Kontakte des Leistungsschalters 1 genau zu einer Phasenlage, die mit dem Vektor des Stromes der Phase L1 einen Winkel von 50 elektrischen Graden bildet und zwischen den Vektoren der Phasen L1 und L2 liegt. In dieser Phasenlage entspricht die Erregung des dreiphasigen Feldes in den Kernschenkeln des Transformators 2 den nach der letzten Abschaltung eingetretenen Verhältnissen der Remanenzfelder und es tritt eine sofortige stationäre Flußverteilung in den Kernschenkeln ein.

Bevorzugterweise besteht die Logikschaltung 43 aus einem Mikroprozessor mit Zeit-Einheit, wodurch eine Vereinfachung der Schaltung, dabei wirtschaftliche Ausführung der Einrichtung erzielbar ist. Die Funktion der einstellbaren Zeitstufe 33 und die Auswertung der Signale aus der Speicherschaltung 45 bis 48 kann dabei vom Mikroprozessor übernommen werden. Zur Anzeige der in der Zeitstufe 33 bzw. Zeit-Einheit eingegebenen Zeit kann eine digitale LCD-Anzeige vorhanden sein.

In Fig. 1 ist der Mikroprozessor strichpunktiert angedeutet.

Bei in Dreieck oder speziell geschalteten dreiphasigen Transformatoren liegen die Verhältnisse anders als beim beschriebenen Beispiel, jedoch können auch hier die gemeinsamen Einschaltzeitpunkte nach bekannten physikalischen Gesetzen errechnet werden.

Ein besonderer Vorteil ergibt sich, wenn die erfindungsgemäße Einrichtung mit einem Differentialschutzrelais oder Spannungsregler-Steuergerät kombiniert wird. Bestimmte Schaltkreise, beispielsweise zur Erfassung der Abzweigströme oder der Spannung, sind nämlich in solchen Relais oder Steuergeräten bereits vorhanden. Mit einem Spannungsregler-Steuergerät ist der stationäre absolute Magnetisierungsstrom beim Einschalten eines Transformators 2 beeinflußbar. Regelt das Steuergerät vor dem Einschalten auf eine höhere Windungszahl des Transformators, werden sich der Magnetisierungsstrom und damit auch der Einschaltstromstoß verringern.

Die Kombination der erfindungsgemäßen Einrichtung mit einem Spannungsregler-Steuergerät zur Minimierung von Einschaltstromstößen ist daher von besonderem Vorteil.

Das praktisch stoßfreie Einschalten von Transformatoren ermöglicht außerdem eine genauere Einstellung des Differentialschutzes. Fehlauslösungen durch Einschaltstromstöße waren bisher nicht zu vermeiden, so daß die Differentialschutzrelais auf höhere Ansprechströme eingestellt werden mußten, um den Betrieb aufrecht erhalten zu können. Der Wert des überlagerten Reserveschutzes war dadurch ebenfalls gemindert und die Betriebssicherheit herabgesetzt.

Die erfindungsgemäße Einrichtung ist besonders für Leistungsschalter mit mechanischem Antrieb, z.B. Motorfeder- oder Federkraftspeicherantrieb, geeignet, weil solche Leistungsschalter Einschalt-Eigenzeiten mit hoher Genauigkeit aufweisen. Alterungserscheinungen und Temperatureinflüsse können durch Kontrollen und Nachstellen der Zeitstufe 33 leicht korrigiert werden.

## Patentansprüche

1. Einrichtung zum gesteuerten Einschalten von induktiven Elementen im Hochspannungsnetz, insbesondere zum Minimieren von Einschaltstromstößen, mit einer im Schaltsignalweg zu einem Mehrphasen-Leistungsschalter (1) vorgesehenen Torschaltung (15), welche mit einem Steuereingang an eine Steuersignalschaltung angeschlossen ist, die eine mit der Hochspannung oder einer dazu synchronen Wechselspannung als Meßspannung koppelbare Detektorschaltung (21, 24, 27, 30) und eine mit dieser verbundene, einstellbare Zeitstufe (33) enthält, wobei eine mit den durch den Mehrphasen-Leistungsschalter geschalteten Abzweigströmen koppelbare Speicherschaltung (45 bis 48) zur Speicherung der Polarität der letzten Stromhalbwellen vor dem Abschalten des Mehrphasen-Leistungsschalters vorhanden ist, dadurch gekennzeichnet, daß die Speicherschaltung (45 bis 48) aus einem Verknüpfungsglied (48) und je zwei Komparatoren (45a, 45b) pro Phase besteht, deren Ausgänge mit je einem Eingang einer bistabilen Kippstufe verbunden sind, wobei der Eingang des ersten Komparators (45a) direkt, der Eingang des zweiten Komparators (45b) dagegen über einen Vollweggleichrichter (54; 55; 56) an einen Wandler (51; 52; 53) angeschlossen ist, der vom einzuschaltenden Abzweigstrom (L1; L2; L3) gespeist wird, und der Ausgang des zweiten Komparators (45b) mit dem Eingang des Verknüpfungsgliedes (48) verbunden ist, dessen Ausgang mit den zweiten Eingängen der bistabilen Kippstufen in Verbindung steht, und daß der Ausgang der Detektorschaltung (21, 24, 27, 30) sowie die Ausgänge der bistabilen Kippstufen an die Eingänge einer Logikschaltung (43) mit variablen Zeitgliedern angeschlossen sind, welche die Signale aus der Detektorschaltung (21, 24, 27, 30) und Speicherschaltung (45 bis 48) auswertet und je nach Polarität der letzten Stromhalbwelle in den einzelnen Phasen (L1; L2; L3) und unter Berücksichtigung der erstlöschenden Phase sowie der in der einstellbaren Zeitstufe (33) ausgewählten Zeit einen für alle Phasen (L1; L2; L3) gemeinsamen Einschaltzeitpunkt freigibt.

2. Einrichtung nach Anspruch 1 zum gesteuerten Einschalten von induktiven Elementen in einem dreiphasigen Hochspannungsnetz, dadurch gekennzeichnet, daß die für alle drei Phasen (L1; L2; L3) gemeinsamen Einschaltzeitpunkte in zwölf vorbestimmten Zeitabständen einer Periode der Nennfrequenz der Hochspannung gestaffelt sind.

3. Einrichtung nach Anspruch 2, dadurch gekennzeichnet, daß die Logikschaltung (43) mit variablen Zeitgliedern je nach Polarität der letzten Stromhalbwelle in den drei Phasen (L1; L2; L3) vor dem Abschalten des Dreiphasen- Leistungsschalters (1) und unter Berücksichtigung der erstlöschenden Phase einen gemeinsamen Einschaltzeitpunkt aus den vorbestimmten Einschaltzeitpunkten wählt, mit der oder einem Vielfachen der Zeit einer Periode der Hochspannungs-Nennfrequenz addiert und von dieser Summe die in der einstellbaren Zeitstufe (33) eingegebene Zeit abzieht.

4. Einrichtung nach einem der Ansprüche 1 bis 3, dadurch gekennzeichnet, daß die in der einstellbaren Zeitstufe (33) ausgewählte Zeit der elektrischen Einschalt-Eigenzeit des Mehrphasen-Leistungsschalters entspricht.

5. Einrichtung nach einem der Ansprüche 1 bis 4, dadurch gekennzeichnet, daß die Logikschaltung (43) mit variablen Zeitgliedern aus einem Mikroprozessor mit Zeit-Einheit besteht.

6. Einrichtung nach einem der Ansprüche 1 bis 5, dadurch gekennzeichnet, daß die Logikschaltung (43) mit variablen Zeitgliedern von der Detektorschaltung (21, 24, 27, 30) nur Impulse mit bei einem Spannungs-Nulldurchgang ansteigender Flanke verarbeitet.

7. Einrichtung nach einem der Ansprüche 1 bis 6, dadurch gekennzeichnet, daß die gesamte Schaltung in einem Differentialschutzrelais oder Spannungsregler-Steuergerät integriert ist.

## Claims

1. Device for the controlled switching-on of inductive elements in a high-voltage network, especially for minimizing switching-on current surges, having a gate circuit (15) which is provided in the switching signal path to a multi-phase power circuit breaker (1) and is connected by means of a control input to a control signal circuit which contains a detector circuit (21, 24, 27, 30), which can be coupled to the high voltage or to an AC voltage, which is synchronous thereto, as a measurement voltage, and an adjustable timer (33) which is connected to said detector circuit, there being provided a memory circuit (45 to 48), which can be coupled to the branch currents which are switched by the multi-phase power circuit breaker, for storing the polarity of the last current half-cycles before the multi-phase power circuit breaker was switched off, characterized in that the memory circuit (45 to 48) consists of a logic element (48) and in each case two comparators (45a, 45b) per phase, whose outputs are connected to in each case one input of a bistable multivibrator, the input of the first comparator (45a) being connected directly, and the input of the second comparator (45b) in contrast via a fullwave rectifier (54; 55; 56), to a converter (51; 52; 52) which is supplied by the branch current (L1; L2; L3) to be switched on, and the output of the second comparator (45b) being connected to the input of the logic element (48) whose output is connected to the second inputs of the bistable multivibrators, and in that the output of the detector circuit (21, 24, 27, 30) and the outputs of the bistable multivibratos are connected to the inputs of a logic circuit (43) which has variable timing elements, evaluates the signals from the detector circuit (21, 24, 27, 30) and the memory circuit (45 to 48), and enables a switching-on time, which is common to all the phases (L1; L2; L3), depending on the polarity of the last current half-cycle in the individual phases (L1; L2; L3) and taking into account the first phase to extinguish and the time which is selected in the adjustable timer (33).

2. Device according to Claim 1 for the controlled switching-on of inductive elements in a three-phase high-voltage network, characterized in that the switching-on times, which are common to all three phases (L1; L2, L3), are staggered at twelve predetermined time intervals of one cycle of the nominal frequency of the high voltage.

3. Device according to Claim 2, characterized in that the logic circuit (43) having variable timing elements selects a common switching-on time from the predetermined switching-on times, depending on the polarity of the last current half-cycle in the three phases (L1; L2; L3) before the three-phase power circuit breaker (1) was switched off and taking into account the first phase to extinguish, adds it to the time, or a multiple of the time, of one cycle of the high-voltage nominal frequency, and subtracts the time entered in the adjustable timer (33) from this sum.

4. Device according to one of Claims 1 to 3, characterized in that the time selected in the adjustable timer (33) corresponds to the natural electrical switching-on time of the multi-phase power circuit breaker.

5. Device according to one of Claims 1 to 4, characterized in that the logic circuit (43) having variable timing elements consists of a microprocessor with a timing unit.

6. Device according to one of Claims 1 to 5, characterized in that the logic circuit (43) having variable timing elements processes only those pulses from the detector circuit (21, 24, 27, 30) which have a rising edge at a zero voltage crossing.

7. Device according to one of Claims 1 to 6, characterized in that the entire circuit is integrated in a differential-protection relay or voltage regulator/controller.

## Revendications

1. Dispositif pour l'enclenchement contrôlé d'éléments inductifs dans un réseau haute tension, en particulier pour minimiser les coups de courant d'enclenchement, avec une porte (15) prévue dans la voie du signal de commutation vers un sectionneur de puissance multiphasé (1), ladite porte (15) est reliée à une entrée de commande d'un circuit de commande qui comprend un détecteur (21, 24, 27, 30) pouvant être couplé avec la haute tension ou avec une tension alternative synchrone à cet effet comme tension de mesure, et un circuit de temporisation réglable relié au détecteur, dans lequel il est prévu un circuit de mémoire (45 à 48) pouvant être couplé avec les courants de dérivation commutés par le sectionneur de puissance multiphasé pour mémoriser la polarité des dernières demi-ondes de courant avant la déconnection du sectionneur de puissance multiphasé, caractérisé en ce que le circuit à mémoire (45 à 48) est constitué d'un élément logique (48) et de deux comparateurs (45a, 45b) par phase, dont les sorties sont chacune reliées à l'entrée d'un bistable, dans lequel l'entrée du premier comparateur (45a) est reliée directement tandis que l'entrée du second comparateur (45b) est reliée par un redresseur pleine onde (54; 55; 56) à un convertisseur qui est alimenté par les courants dérivés (L1; L2; L3) à connecter, et la sortie du second comparateur (45b) est reliée avec l'entrée de l'élément logique (48) dont la sortie est reliée avec les secondes entrées des bistables, et en ce que la sortie du détecteur (21, 24, 27, 30) ainsi que les sorties des bistables sont reliées aux entrées d'un circuit logique (43) à éléments à temporisation réglable, ledit circuit logique (43) traite les signaux issus du détecteur (21, 24, 27, 30) et de la mémoire (45 à 48) et selon la polarité de la dernière demi-onde de courant dans chacune des phases (L1; L2; L3) et en tenant compte de la première phase à s'éteindre ainsi que du temps choisi dans le circuit à temporisation réglable donne un instant d'enclenchement commun à toutes les phases (L1; L2; L3).

2. Dispositif pour l'enclenchement contrôlé d'éléments inductifs dans un réseau haute tension triphasé, caractérisé en ce que les instants d'enclenchement communs pour toutes les trois phases (L1; L2; L3) sont échelonnés sur douze intervalles de temps prédéterminés d'une période de la fréquence nominale de la haute tension.

3. Dispositif selon la revendication 2, caractérisé en ce que le circuit logique (43) avec les éléments à temporisation réglable sélectionne l'instant d'enclenchement commun parmi les instants d'enclenchement prédéterminés selon la polarité de la dernière demi-onde de courant dans les trois phases (L1; L2; L3) avant la mise hors circuit du sectionneur de puissance triphasé et en tenant compte de la première phase à s'éteindre puis y ajoute le temps d'une période de la fréquence nominale haute tension ou un multiple de cette période et déduit de cette somme le temps introduit dans l'étage à temporisation réglable (33).

4. Dispositif selon l'une des revendications 1 à 3, caractérisé en ce le temps choisi pour l'étage à temporisation réglable (33) correspond au temps de manoeuvre électrique du sectionneur de puissance multiphasé.

5. Dispositif selon l'une des revendications 1 à 4, caractérisé en ce que le circuit logique (43) avec éléments à temporisation variable est constitué d'un microprocesseur avec une unité de temps.

6. Dispositif selon l'une des revendications 1 à 5, caractérisé en ce que le circuit logique (43) avec éléments à temporisation variable traite seulement les impulsions du détecteur (21, 24, 27, 30) dont le flanc d'attaque passe par la tension nulle.

7. Dispositif selon l'une des revendications 1 à 6, caractérisé en ce que la totalité du circuit est intégré dans un relais de protection différentielle ou un poste de commande et de réglage de tension.
